Europäisches Patentamt

European Patent Office

Office européen des brevets

(19)

(11) Publication number: 0 360 475 A2

# EUROPEAN PATENT APPLICATION

(12)

(21) Application number: 89309219.7

(22) Date of filing: 11.09.89

(51) Int. Cl.⁵: C08L 23/16 , //(C08L23/16, 23:02,23:08)

(30) Priority: 14.09.88 AU 421/88

(43) Date of publication of application:
28.03.90 Bulletin 90/13

(84) Designated Contracting States:
DE FR GB IT

(71) Applicant: BRIDGESTONE AUSTRALIA LIMITED
1028 South Road
Edwardstown South Australia(AU)

(72) Inventor: Misiak, Jerry Stanislav
12 College Avenue
Bellevue Heights South Australia(AU)
Inventor: Zia, Yadollah
450 South Road
Marleston South Australia(AU)
Inventor: Butler, Michael Francis
5 Meadowvale Road
Sturt South Australia(AU)
Inventor: Holgate, Philip J.
14 Swan Avenue
Happy Valley South Australia(AU)

(74) Representative: Tregear, George Herbert Benjamin et al
LLOYD WISE, TREGEAR & CO Norman House
105-109 Strand
London WC2R 0AE(GB)

(54) Thermoplastic elastomer injection.

(57) A thermoplastic olefinic elastomer capable of being injected into a die to join or bond to rubber comprises a non cross-linked material including EPM, EPDM or both; polyethylene, polypropylene, polybutene-1, or a mixture; and ethylene-vinylacetate copolymer.

EP 0 360 475 A2

## THERMOPLASTIC ELASTOMER INJECTION

This invention relates to a material which is a thermoplastic olefinic elastomer and which is capable of being injected into a die for bonding to or joining mono olefinic copolymer rubber, for example an extrusion of EPDM (Ethylene Propylene Diene Monomer) or a polyolefin modified material, without the need of primers or adhesives. The invention is particularly suitable for joining end-to-end, or effecting a corner join, in a length of weatherstrip.

## BACKGROUND OF THE INVENTION

In certain industrial processes, much delay occurs in the joining of extrusions of EPDM or polyolefin modified materials because of the need to use adhesives or primers, and a very slow curing operation, which might occupy a die set for three minutes. One typical example is the joining of the vertical and horizontal portions of a glass run channel for a motor vehicle. There are usually four such joins in a motor vehicle, and yet the present method of joining occupies so much time that there is a need for a large amount of expensive equipment.

## PRIOR ART

The most relevant prior art known to the applicants exists in U.S. Patents 3,806,558 (Uniroyal), and 3,919,358 (B.F. Goodrich).

In 3,806,556, blends are disclosed of EPM or EPDM rubber with polyethylene or polypropylene, which are elastomeric and are capable of moulding or extrusion. The blends contain only small amounts of curative agents, and the dynamic curing conditions are such that the cure is only partial, and cross-linking is not extended to the state wherein it becomes almost entirely insoluble in the usual solvents for an uncured blend.

In 3,919,358, blends are disclosed of EP or EPDM polymers with poly- -mono olefin polymers, particularly polyethylenes, without any cross-linking at all. The physical characteristics of the blends exhibit high tensile strength (as high as 2790 psi, i.e. 19 MPa) associated with 750% elongation, and the applications for the blends include tubing, cable insulation and moulded items.

It is thought that the blends of either of the above Patents could be used for joining, or bonding to, mono olefinic rubber, by an injection moulding process, and thereby effect a process without the abovementioned curing time. However, in each instance it is thought that use of an adhesive, primer, or both is essential to achieve a satisfactory bond.

Other prior art is disclosed in both said specifications, and further, but less relevant, prior art exists in U.S. Patents 3,909,463 (Allied Chemical).

## BRIEF SUMMARY OF THE INVENTION

The main object of this invention is to provide material and a method whereby there will be no need for a primer or adhesive, wherein the injection moulding can be in any required shape likely to be encountered, and wherein the product does not need curing and the cycles are much faster than conventional joins which embody cross-linking, or which use adhesives or primers.

In this invention, a thermoplastic olefinic elastomer capable of being injected into a die to join or bond to rubber comprises a non cross-linked material including EPM, EPDM or both; polyethylene, polypropylene, polybutene-1, or a mixture; and ethylene-vinyl-acetate copolymer.

Rubber strip is joined by positioning its ends into a mould and injecting the thermoplastic olefinic elastomer into that mould under conditions of above atmospheric temperature, and removing the joined material shortly after it has reached a coherent state. This occurs almost immediately so that the cycle time of a moulding machine can be quite quick, very much quicker than the cycle time involved in making a join of vulcanising rubber, or applying a primer or adhesive.

The invention is primarily distinguished over prior art by the addition of ethylene-vinyl-acetate copolymer, the vinyl acetate content of which ensures a good bond under injection conditions. Although tensile strength and elongation are less than the best results achieved in the U.S. Patent 3,919,358 supra, these characteristics are adequate for most usage, and a good, soft feel elastomer is strongly bonded to the strip.

More specifically, the invention consists of the following components intimately intermixed without cross-linking:

(a) 100 parts by weight of mono olefinic copolymer rubber consisting of at least one of EPM (ethylene propylene copolymer rubber) and EPDM (ethylene propylene non-conjugated diene terpolymer rubber),

(b) between 10 parts and 20 parts by weight of a solid, medium to high molecular weight polyolefin polymer consisting of at least one of polyethylene, polypropylene and polybutene-1, and

(c) between 5 parts and 20 parts by weight of medium to high molecular weight EVA (ethylene-vinyl acetate copolymer) which contains vinyl acetate content in the range 20% to 40%.

## DETAILED DESCRIPTION OF THE DRAWINGS

An embodiment of the invention is described hereunder in some detail with reference to, and is illustrated in, the accompanying drawings, in which

Fig. 1 is a fragmentary perspective view of two motor vehicle glass-run rubber weatherstrips bonded and joined to form a corner by a moulding of material according to this invention; and

Fig. 2 is a diagrammatic plan of a die used to effect that moulding.

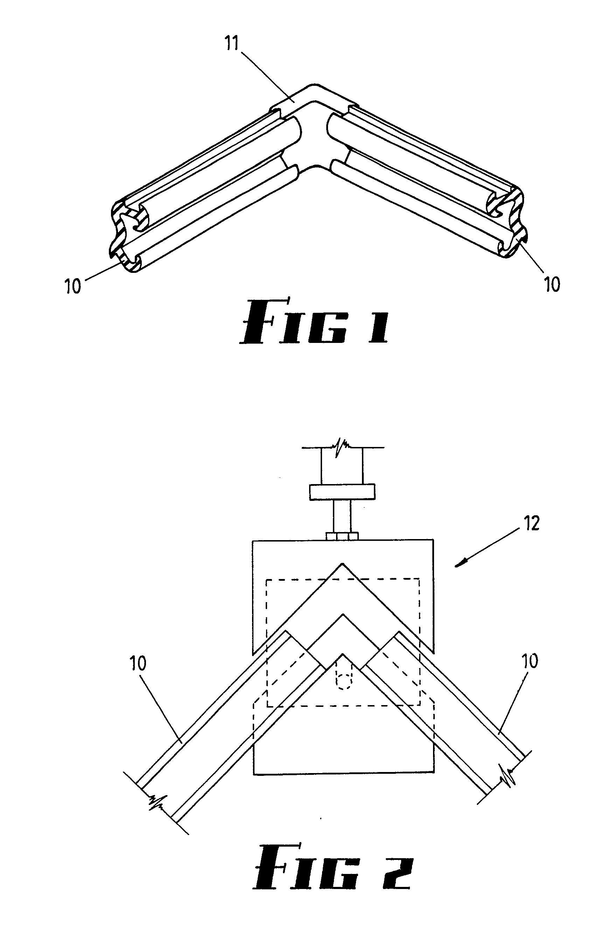

In Fig. 1, two strips of extruded mono olefinic copolymer rubber 10 (EPM, EPDM, or a blend) are joined by a moulding 11 of elastomeric material, effected in a three part moulding die 12 at a temperature of between 30°C and 50°C. The cross-sectional shape of the strips 10 are such that they fit within a door frame of a motor vehicle, and resiliently engage inner and outer surfaces of openable side windows. They are known in the trade as "weatherstrip glass run channels". The moulding 11 joins the two channels at 90°.

The elastomeric material is a blend comprising three components intimately intermixed without cross-linking:

(a) a low molecular weight copolymer rubber,

(b) a polyolefin polymer, and

(c) an ethylene-vinyl acetate copolymer.

### (a) Mono olefinic rubber

The mono olefinic copolymer rubber, is either a saturated EPM (ethylene propylene copolymer rubber) with a low or medium molecular weight, or an unsaturated EPDM (ethylene propylene non-conjugated diene terpolymer rubber), with a low or medium molecular weight. A blend of these two rubbers may also be used.

The mono olefinic copolymer rubber is an amorphous, random elastomeric copolymer of two or more mono olefins, with or without at least one copolymerizable polyene. Usually, but not necessarily, one of the mono olefins is ethylene, while the other is preferably polypropylene, however other mono olefins may be used.

The mono olefin copolymer rubber may be a saturated material, such as in EPM. It is usually preferred to include in the copolymer a small amount of at least one copolymerizable polyene to get unsaturation. Although conjugated dienes like butadiene, etc., may be used for this purpose, in practice it is usually a non-conjugated diene such as 1,4-Hexadiene, etc. The polyenes employed are not limited to those with only two double bonds but include those having three or more double bonds. Blends based on Terpolymer rubber (EPDM) have the most advantageous properties. This material could also be a major component of strip 10.

### (b) Polyolefin Polymer

The polyolefin polymer, which is another component of the material, is a solid, medium or high molecular weight plastic material, like polyethylene, polypropylene, polybutene-1, etc.

The crystalline polyolefins, such as polyethylene, either low density (e.g. 0.910 - 0.925 g/cc) medium density (0.926 - 0.940 g/cc), or high density (0.941 - 0.965 g/cc), may be used.

3

Polypropylene is polyolefinic plastic, highly crystalline, with a density of 0.800 - 0.980 g/cc.

Crystalline block copolymers of ethylene and propylene (which are plastics and different from amorphous random ethylene-propylene elastomers) can be used.

(c) Ethylene-vinyl acetate copolymer (EVA)

The third component of the invented material is ethylene-vinyl acetate copolymer (EVA), with medium or high molecular weight.

EVA copolymers are produced by copolymerization of ethylene and vinyl acetate. The vinyl acetate content could be in the range of 20% to 40%. EVA copolymers contain a random distribution of ethylene and vinyl acetate groups. The vinyl acetate group is polar and bulky compared with the ethylene groups and behaves as a short side chain, so it impedes crystallization and gives a more flexible product. It is primarily the presence of the vinyl acetate group which enables a good bond to be achieved without adhesive or primer.

Any conventional stabilizer or anti-oxidant can be used, e.g. amine types, phenolic types-sulphides, phenyl alkenes, phosphites, etc.

Some examples are;

- 2,2,4-Trimethyl - 1,2-Dihydroquinoline
- Diphenyl Amine acetone condensate
- Aldol alpha - naphthylamine
- Octylated diphenylamine
- N-phenyl-N-cyclohexyl-P-phenol
- Styrene-resorcinol resin
- di-p-cresal-2-propane
- 2,5-di tent amyl hydroquinone
- dilauryl-3,3'-thiodipropionate
- and so on.

Any suitable pigment, especially ones which are in the form of M/B (master batch), can be used.

MIXING OF COMPONENTS

The material being a thermoplastic elastomer alloy can be mixed for example on roll mill or in an extruder to provide the thermoplastic blend of the invention. The mixing temperature should be sufficient to soften the plastic and form a uniform mix. Pigments, fillers, stabilizers, lubricants, U.V. screening agents, or other appropriate compounding or modifying ingredients may be included in the blend if desired.

The flow viscosity characteristics of the invented blends is such as to ensure filling the mould under the operating conditions by injection moulding.

The reprocessability of the blends of the invention is demonstrated by the fact that blends can be reprocessed several times and still retain their desirable characteristics.

EXAMPLE 1

100 parts by weight of EPDM were mixed as described above in an extruder wherein the temperature ranged from 160° C to 180° C, and the screw rotated at 25-30 R.P.M.:

| EPDM | 100 parts by weight |
|---|---|
| Polypropylene (Homopolymer) | 10 to 20 parts by weight |
| Ethylene-Vinyl Acetate copolymer | 5 to 20 parts by weight |
| Anti-oxidants | 0.5 to 1.5 parts by weight |
| U.V. stabilizers | 0.3 to 0.5 parts by weight |
| Pigments | 2.0 to 5.0 parts by weight |

The EPDM was a low viscosity high ethylene propylene ratio, low diene Terpolymer.

| EXAMPLE II | |
|---|---|
| EPDM | 100 parts by weight |
| Polypropylene (Copolymer) | 10 to 20 parts by weight |
| Ethylene-Vinyl Acetate copolymer | 5 to 15 parts by weight |
| Anti-oxidants | 0.5 to 1.5 parts by weight |
| U.V. stabilizers | 0.3 to 0.5 parts by weight |
| Pigments | 2.0 to 5.0 parts by weight |

In the second Example, the EPDM was a medium ethylene propylene ratio, medium diene Terpolymer. Mixing was the same as in Example I.

The following physical properties were possessed by a moulding of the elastomer produced in Example I:

| Physical Properties | | |
|---|---|---|
| | Original | Aged 7 days at 70°C |
| Hardness, Shore A | 82-87 | +2% |
| Modulus 100% MPA | 5.00-6.00 | |
| Modulus 200% MPA | 7.00-8.00 | |
| Modulus 300% MPA | 8.00-9.00 | |
| Tensile Strength MPA | 8.00-9.00 | +20% |
| Elongation % | 350-400 | -27% |

| Weatherability - | |
|---|---|
| Black Panel Temp 83°C ± 2°C, 80 ± 5% RH XENON ARC | |
| Weatherometer - 500 hours | Slight orange peeling effect |
| Weatherometer - 1000 hours | More severe orange peeling effect |
| 1000 hours equivalent to one year outdoor exposure | |
| Ozone - 72 hours @ 50pphm | No cracking or blooming |
| Outdoor exposure    - 3 months    - 12 months | No apparent change |
| Allunga Exposure    - 2 months    - 12 months | Inspection under magnification shows no cracking or other changes |
| One year exposure - near 110,000 langleys | |

| Rheological Properties | |
|---|---|
| Monsanto Capillary Rheometer. | |
| Melt Viscosity - | 26K pascal sec. |
| Ram pressure - | 350KPA |
| Temperature - | 180°C |
| Die - | 15:1 |

Similar properties were obtained from Example II.

Contrary to expectation, it is found that the strength of a moulding is not greatly affected by temperature up to 70°C, and the join strength is of the same order as the strength of the EPDM which is being joined.

The above embodiment relates to joining of an extruded strip of EPDM. The invention has further applications, for example joining hoses end-to-end, joining weatherstrips for windows for buildings, or other vehicles.

## Claims

1. A thermoplastic olefinic elastomer capable of being injected in a die to bond to or join mono olefinic copolymer rubber, comprising the following components intimately intermixed without cross-linking:

(a) 100 parts by weight of mono olefinic copolymer rubber consisting of at least one of EPM (ethylene propylene copolymer rubber) and EPDM (ethylene propylene non-conjugated diene terpolymer rubber),

(b) between 10 parts and 20 parts by weight of a solid, medium to high molecular weight polyolefin polymer consisting of at least one of polyethylene, polypropylene and polybutene-1, and

(c) between 5 parts and 20 parts by weight of medium to high molecular weight EVA (ethylene-vinyl acetate copolymer) which contains vinyl acetate content in the range 20% to 40%.

2. A thermoplastic olefinic elastomer according to claim 1 wherein said mono olefinic copolymer rubber is EPDM and said polyolefin polymer is polypropylene homopolymer.

3. A thermoplastic olefinic elastomer according to claim 1 wherein said mono olefinic copolymer is EPDM and said polyolefin polymer is polypropylene copolymer.

4. A thermoplastic olefinic elastomer according to any preceding claim wherein the ethylene-vinyl acetate copolymer is present in 5 to 15 parts by weight.

5. A thermoplastic olefinic elastomer according to any preceding claim further comprising 0.5 to 1.5 parts by weight of anti-oxidants.

6. A thermoplastic olefinic elastomer according to any preceding claim further comprising 0.3 to 0.5 parts by weight of U.V. stabilisers.

7. A thermoplastic olefinic elastomer according to any preceding claim further comprising 2.0 to 5.0 parts by weight of pigments.

8. A thermoplastic olefinic elastomer according to any preceding claim wherein said intermixing is in a roll mill at a temperature of 160°C to 180°C.

9. A thermoplastic olefinic elastomer according to claims 1 to 7 wherein said intermixing is in an extruder at a temperature of 160°C to 180°C.

10. A method of producing a thermoplastic olefinic elastomer capable of being injected in a die to bond to or join mono olefinic copolymer rubber, comprising mixing in an extruder at a temperature of 160°C to 180°C without cross-linking, the following

(a) 100 parts by weight of mono olefinic copolymer rubber consisting of at least one of EPM (ethylene propylene copolymer rubber) and EPDM (ethylene propylene non-conjugated diene terpolymer rubber),

(b) between 10 parts and 20 parts by weight of a solid, medium to high molecular weight polyolefin polymer consisting of at least one of polyethylene, polypropylene and polybutene-1, and

(c) between 5 parts and 20 parts by weight of medium to high molecular weight EVA (ethylene-vinyl acetate copolymer) which contains vinyl acetate content in the range 20% to 40%.

11. A method of bonding and joining two strips of mono olefinic rubber, comprising positioning those strips in a die where they require to be joined, heating and injecting thermoplastic olefinic elastomer according to any one of claims 1 to 9 into the cavity of the die which is at a temperature of between 30°C and 50C, and removing after setting of the elastomer.

FIG 1

FIG 2